(19) **Europäisches Patentamt / European Patent Office / Office européen des brevets**

(11) **EP 3 618 027 B1**

(12) # EUROPEAN PATENT SPECIFICATION

(45) Date of publication and mention of the grant of the patent:
**23.06.2021 Bulletin 2021/25**

(21) Application number: **17909717.5**

(22) Date of filing: **17.05.2017**

(51) Int Cl.:
*G01C 21/32* (2006.01)  *G01C 21/00* (2006.01)
*G08G 1/01* (2006.01)  *G08G 1/017* (2006.01)
*G08G 1/052* (2006.01)  *G08G 1/056* (2006.01)
*G06K 9/00* (2006.01)  *G01S 13/66* (2006.01)
*G01S 13/87* (2006.01)  *G01S 13/91* (2006.01)

(86) International application number:
**PCT/JP2017/018570**

(87) International publication number:
**WO 2018/211638 (22.11.2018 Gazette 2018/47)**

(54) **OBJECT IDENTIFICATION DEVICE, ROAD-SIDE DEVICE AND OBJECT IDENTIFICATION METHOD**

OBJEKTIDENTIFIKATIONSVORRICHTUNG, STRASSENSEITENVORRICHTUNG UND OBJEKTIDENTIFIKATIONSVERFAHREN

DISPOSITIF D'IDENTIFICATION D'OBJET, DISPOSITIF CÔTÉ ROUTE ET PROCÉDÉ D'IDENTIFICATION D'OBJET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.03.2020 Bulletin 2020/10**

(73) Proprietor: **Mitsubishi Electric Corporation**
**Chiyoda-ku**
**Tokyo 100-8310 (JP)**

(72) Inventors:
 • **HOSOI, Kyoko**
  **Tokyo 100-8310 (JP)**
 • **NAKURA, Kenichi**
  **Tokyo 100-8310 (JP)**
 • **SUEHIRO, Takeshi**
  **Tokyo 100-8310 (JP)**

(74) Representative: **Pfenning, Meinig & Partner mbB**
**Patent- und Rechtsanwälte**
**Theresienhöhe 11a**
**80339 München (DE)**

(56) References cited:
 **JP-A- 2001 344 689    JP-A- 2001 344 689**
 **JP-B2- 4 561 346**

 • **MICHAEL DIXON ET AL: "An efficient system for vehicle tracking in multi-camera networks", DISTRIBUTED SMART CAMERAS, 2009. ICDSC 2009. THIRD ACM/IEEE INTERNATIONAL CONFERENCE ON, IEEE, PISCATAWAY, NJ, USA, 30 August 2009 (2009-08-30), pages 1-8, XP031548084, ISBN: 978-1-4244-4620-9**
 • **ZOFKA MARC RENE ET AL: "Data-driven simulation and parametrization of traffic scenarios for the development of advanced driver assistance systems", 2015 18TH INTERNATIONAL CONFERENCE ON INFORMATION FUSION (FUSION), ISIF, 6 July 2015 (2015-07-06), pages 1422-1428, XP033204853, [retrieved on 2015-09-14]**

EP 3 618 027 B1

**Description**

Field

The present invention relates to an object identification device, a roadside apparatus, and an object identification method for identifying objects at the roadside.

Background

The realization of automatic traveling is desired which uses a system equipped with artificial intelligence as a driver, in place of a human. In order to realize the automatic traveling, a map with a fast update cycle including various information such as movements of surrounding vehicles and people is required, instead of a map with a low update frequency in which roads, buildings, etc. are shown. Such a map with a fast update cycle, that is, a map including dynamic information is called a dynamic map. In the creation of a dynamic map, an update cycle of 100 ms or less is required. It is necessary in the creation of a dynamic map to collect information on observed positions of objects observed by a plurality of sensors such as radars installed at the roadside, identify the same object, and deliver information on the observed position. Patent Literature 1 discloses a technique to identify the same object in an aircraft using a tracking function by radar.

Citation List

Patent Literature

Patent Literature 1: Japanese Patent Application Laid-open No. 2006-153736

MICHAEL DIXON ET AL: "An efficient system for vehicle tracking in multi-camera networks", DISTRIBUTED SMART CAMERAS, 2009. ICDSC 2009. THIRD ACM/IEEE INTERNATIONAL CONFERENCE ON, IEEE, PISCATAWAY, NJ, USA, 30 August 2009 (2009-08-30), pages 1-8, XP031548084, ISBN: 978-1-4244-4620-9 exploits constraints inherent in urban environments (i.e. while there are often many vehicles, they follow relatively consistent paths) to create novel visual processing tools that are highly efficient in detecting cars in a fixed scene and at connecting these detections into partial tracks. It derives extensions to a network flow based probabilistic data association model to connect these tracks between cameras.

Summary

Technical Problem

However, according to the above conventional technique, the identification of observed positions acquired at different times is determined based on whether a subsequent observed position is observed in an estimated error ellipsoid, assuming that an object has made a uniform linear motion from a previous observed position. Further, in order to continue identification when an object turns, it is necessary to calculate observed positions, considering all motion models such as left turning motion and right turning motion in addition to a uniform linear motion model. Consequently, there is a problem of high processing load in the identification of the same object.

The present invention has been made in view of the above. It is an object of the present invention to provide an object identification device capable of reducing the load of processing to identify objects.

Solution to Problem

In order to solve the problem described above and achieve the object, an object identification device of the present invention includes a map information storage unit that stores map information that is information on a road. The object identification device further includes a region determination unit that acquires observed position information indicating observed positions at which an object is observed from a plurality of sensors, and determines whether each observed position is in any one of regions into which an area indicated by the map information is divided, and a road reference position conversion unit that converts each observed position determined to be in the region of the map information, into a traveling direction position indicating a position in a direction parallel to an assumed road direction in the region indicated by the map information, and a transverse direction position indicating a position in a direction perpendicular to the assumed road direction in the region, using the map information. The object identification device further includes a comparison unit that rearranges the observed positions after the position conversion in order of the traveling direction, creates pairs of front and rear observed positions in the traveling direction, calculates a difference in the traveling direction positions and a difference in the transverse direction positions between each pair of observed positions, and determines that a pair of observed positions between which the differences are within thresholds specified in respective items are derived from the same object, and determines that a pair of observed positions between which at least one of the differences is greater than the threshold are derived from different objects.

Advantageous Effects of Invention

The object identification device according to the present invention has an advantage of being able to reduce the load of processing to identify objects.

Brief Description of Drawings

FIG. 1 is a block diagram illustrating a configuration example of an object identification device included in a roadside apparatus.
FIG. 2 is a graph illustrating an example in which observed positions of objects observed by a device having no map information are plotted in a relative coordinate system parallel to latitude and longitude.
FIG. 3 is a graph illustrating an example in which observed positions of objects observed by the object identification device are plotted together with an assumed road position.
FIG. 4 is a diagram illustrating relative distances of the objects to the road substituted for the observed positions by the object identification device.
FIG. 5 is a diagram illustrating an example of the contents of map information stored in a map information storage unit of the object identification device.
FIG. 6 is a flowchart illustrating the operation of the object identification device.
FIG. 7 is a diagram illustrating an example of processing to convert observed position information into a traveling direction position in a region and a transverse direction position in the region in the object identification device.
FIG. 8 is a diagram illustrating an example when a device storing no map information erroneously determines that two observed positions are derived from the same object.
FIG. 9 is a diagram illustrating an example of a case where a processing circuit of the object identification device is formed of a processor and memory.
FIG. 10 is a diagram illustrating an example of a case where a processing circuit of the object identification device is formed of dedicated hardware.

Description of Embodiments

Hereinafter, an object identification device, a roadside apparatus, and an object identification method according to an embodiment of the present invention will be described in detail with reference to the drawings. Note that the embodiment is not intended to limit the invention.

Embodiment.

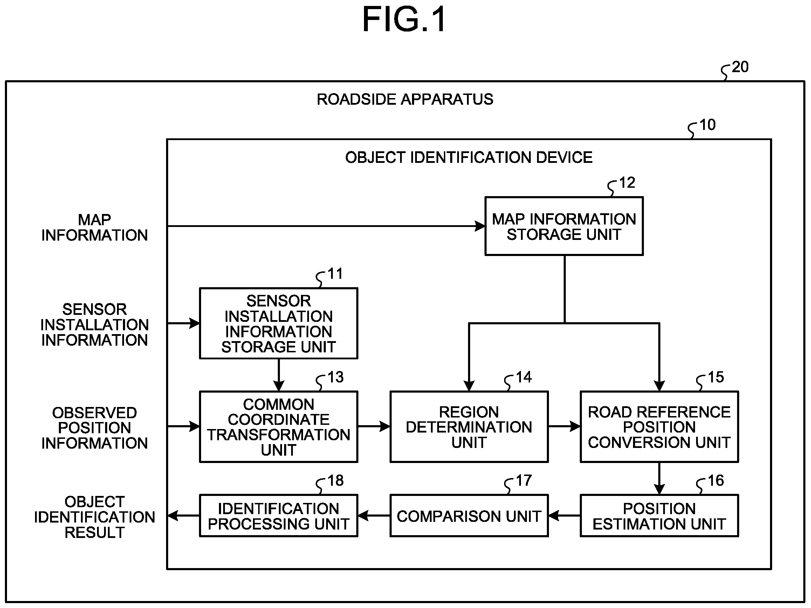

FIG. 1 is a block diagram illustrating a configuration example of an object identification device 10 included in a roadside apparatus 20 according to an embodiment of the present invention. The roadside apparatus 20 is an apparatus such as an edge node installed at the roadside of a road such as an expressway, and includes the object identification device 10. First, in the present embodiment, an outline of object identification processing performed by the object identification device 10 will be described. In the present embodiment, an object is specifically assumed to be a vehicle on a road.
It is obvious that a vehicle traveling an expressway travels on the expressway. Whether the vehicle travels in a curve is determined by the shape of the expressway. Here, the object identification device 10 of the roadside apparatus 20 installed at the roadside stores information on the shape of the road, that is, map information. By an area indicated by the map information being subdivided into a plurality of regions, the object identification device 10 changes the motion model of a vehicle traveling on a curve for a model in which the vehicle moves on a straight line all the way in each region. Consequently, the object identification device 10 can reduce processing load in the identification of a vehicle or an object, compared to a case where a plurality of motion models including turning is considered.

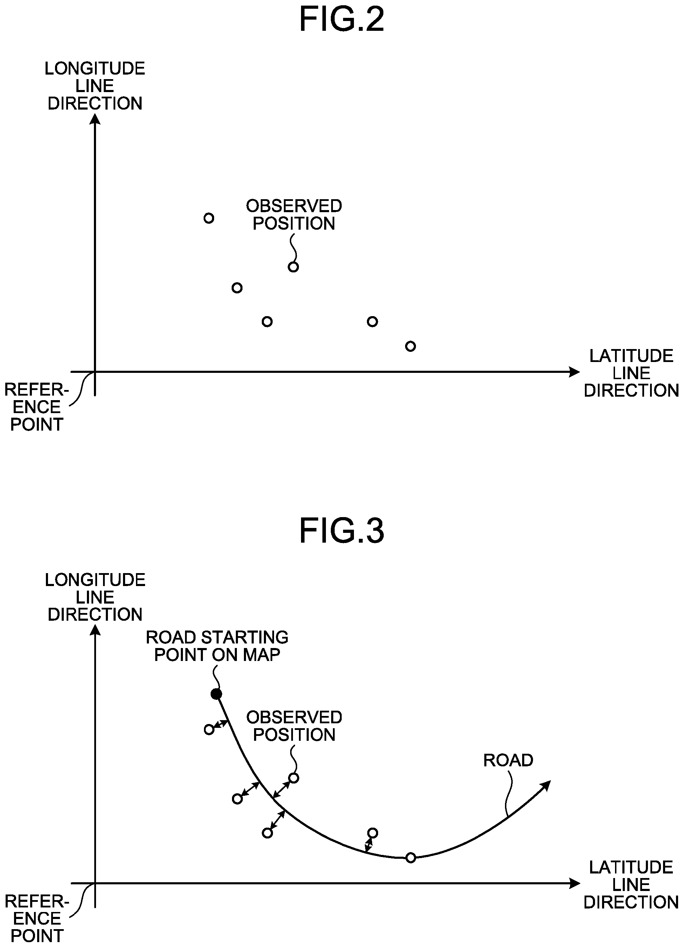

FIG. 2 is a graph illustrating an example in which observed positions of vehicles observed by a device having no map information are plotted in a relative coordinate system parallel to latitude and longitude. Here, as an example, the horizontal axis is the latitude line direction, and the vertical axis is the longitude line direction with respect to a certain reference point. In FIG. 2, the positional relationships between the observed positions and the road are unknown. FIG. 3 is a graph illustrating an example in which observed positions of vehicles observed by the object identification device 10 according to the present embodiment are plotted together with an assumed road position. By comparing the observed positions of the vehicles with the road indicated by the map information stored in advance as illustrated in FIG. 3, the object identification device 10 can derive positions in the traveling direction and positions in the transverse direction that is a direction perpendicular to the traveling direction on the vehicles.

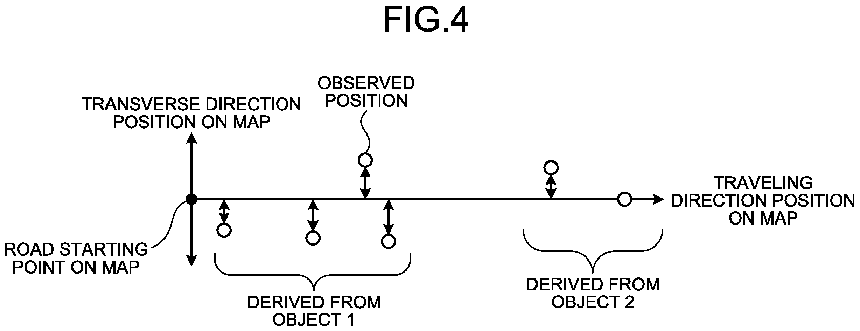

FIG. 4 is a diagram illustrating relative distances of the objects to the road substituted for the observed positions by the object identification device 10 according to the present embodiment. The object identification device 10 substitutes the vehicles traveling on a straight line for the vehicles traveling on the curve as illustrated in FIG. 4, using the map information in which the area is subdivided into the plurality of regions. Thus, the object identification device 10 can easily determine whether two observed positions are derived from the same object or derived from different objects. In FIGS. 3 and 4, a road starting point on the map is information included in the map information. Details of the map information will be described later. In FIG. 4, traveling direction position on the map represents the positions of the vehicles on the road, and transverse direction position on the map represent the positions of the vehicles from the road center in the direction perpendicular to the road, that is, the traveling direction of the vehicles.

The specific configuration and operation of the object identification device 10 will be described. The object identification device 10 includes a sensor installation information storage unit 11, a map information storage unit 12, a common coordinate transformation unit 13, a region determination unit 14, a road reference position conversion unit 15, a position estimation unit 16, a comparison unit, 17, and an identification processing unit 18.

The sensor installation information storage unit 11 stores sensor installation information that is information on the installation positions of the plurality of sensors (not illustrated). Each sensor observes a vehicle at the roadside, and outputs observed position information indicating an observed position that is the position of the vehicle when the sensor has observed the vehicle, to the common coordinate transformation unit 13. It is assumed that there is a plurality of sensors. The sensor installation information is position information in an absolute coordinate system common to the sensors. The sensor installation information may alternatively be position information based on the position of a reference sensor serving as a reference in an absolute coordinate system, and the relative positions of the other sensors to the reference sensor.

The map information storage unit 12 stores map information that is information on the road that vehicles travel. The map information storage unit 12 stores information on the road on the map as a combination of a plurality of straight lines. That is, the map information storage unit 12 stores information on the road, that is, an area managed, as information on a map divided into a plurality of regions according to the curvature of the road. In the divided regions, the road is treated as straight lines. Thus, in the map information, the area indicated by the map information is divided into the plurality of regions, and each divided region is of a size that allows the road to be linearly approximated in the region. The map information stored in the map information storage unit 12 includes division information on the regions, and information such as a passing order of the regions, road starting points in the regions, assumed road directions in the regions, a starting point shared by the entire map, and road starting point distances in the regions.

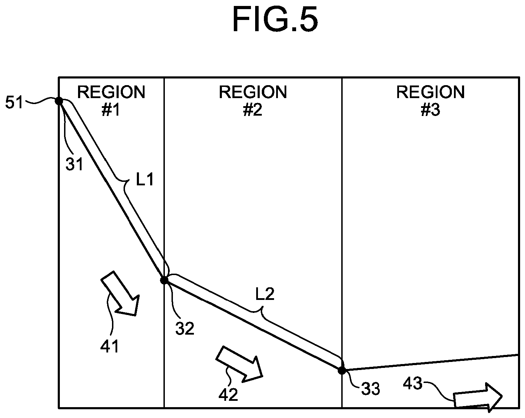

FIG. 5 is a diagram illustrating an example of the contents of the map information stored by the map information storage unit 12 of the object identification device 10 in the present embodiment. The division information on the regions is information indicating the divided state of the area on the map indicated by the map information stored by the map information storage unit 12. The divided state of the area is, for example, the number of divisions of the area on the map indicated by the map information and the shapes of the regions. The example of FIG. 5 shows that the area on the map is divided into three regions #1 to #3, and each region has a rectangular shape. The passing order of the regions indicates the order of the regions through which vehicles pass when traveling in the assumed road directions in the regions. In the example of FIG. 5, identification information such as "#1", "#2", and "#3" assigned to the regions corresponds to the passing order of the regions. The road starting point in each region is a reference point of the road in the region, and is information on a starting point at which the road starts in the region. The example of FIG. 5 shows a road starting point 31 in the region #1, a road starting point 32 in the region #2, and a road starting point 33 in the region #3. The assumed road direction in each region is information defining an extended direction of the road in the region. In the following description, the extended direction of the road is simply referred to as the direction of the road. As described above, the road in each region is a straight line. The example of FIG. 5 shows an assumed road direction 41 in the region #1, an assumed road direction 42 in the region #2, and an assumed road direction 43 in the region #3.

A starting point 51 shared by the entire map is the same as the road starting point in the first region, in the example of FIG. 5, the road starting point 31 in the region #1. The starting point 51 shared by the entire map is a reference point of the road indicated by the map information, and is also referred to as a road starting point on the map. The road starting point distance in each region is a distance from the starting point 51 shared by the entire map to the road starting point in the region. As described above, since the road starting point 31 in the region #1 is the same as the starting point 51 shared by the entire map, the road starting point distance in the region #1 is "0". In the example of FIG. 5, the distance from the starting point 51 shared by the entire map to the road starting point 32 in the region #2 is a road starting point distance L1 in the region #2, and the distance from the starting point 51 shared by the entire map to the road starting point 33 in the region #3 is a road starting point distance (L1+L2) in the region #3. Note that the range of regions of a map indicated by map information only needs to cover a range in which observation of vehicles is required, and may be defined in any form. For example, regions may be specified in rectangular shapes in accordance with a curve, or regions may be divided by circles, trapezoids, or the like. In the example of FIG. 5, it is assumed that vehicles travel in a left-to-right direction. When vehicles travel in a right-to-left direction, the position of the road at the right end in the region #3 may be set as a starting point. When vehicles travel in a right-to-left direction, the position of the road at the left end in the region #1 may be set as a starting point, and the speed of vehicles may be treated as negative.

The description returns to the explanation of FIG. 1. When the observed positions indicated by the observed position information acquired from the plurality of sensors are indicated by the relative positions in the sensors, the common coordinate transformation unit 13 transforms the observed positions into positions in the absolute coordinate system common to the sensors, using the sensor installation information stored in the sensor installation information storage unit 11. For example, when the observed position of a vehicle measured by one of the sensors is in a vector format specified by the direction and distance from the sensor, the common coordinate transformation unit 13 refers to the sensor installation information stored in the sensor installation information storage unit 11, and from the position coordinates of the corresponding sensor, transforms the position in the direction and at the distance represented by the vector into the position of the vehicle represented by an observed position. When the observed position is represented in the common absolute coordinate system shared between the sensors, such as a coordinate system using latitude and longitude, the object identification device 10 can omit the sensor installation information storage unit 11 and the common coordinate transformation unit 13.

The region determination unit 14 acquires the observed position information transformed by the common coordinate transformation unit 13, and determines whether the observed position is in any one of the regions into which the area indicated by the map information is divided. Based on the map information acquired from the map information storage unit 12, the region determination unit 14 determines to which region the observed position belongs, from the division information on the regions included in the map information.

Based on the map information acquired from the map information storage unit 12 and the region determination result of the region determination unit 14, the road reference position conversion unit 15 converts the observed position determined to be in the region of the map information into a traveling direction position of the vehicle indicating a position in a direction parallel to the assumed road direction in the region indicated by the map information, and a transverse direction position of the vehicle indicating a position in a direction perpendicular to the assumed road direction in the region. The road reference position conversion unit 15 also calculates the traveling direction speed of the vehicle at the observed position. The detailed operation of the road reference position conversion unit 15 will be described later.

When the acquisition times of the observed position information acquired from the plurality of sensors vary from observed position information to observed position information, the position estimation unit 16 converts each observed position converted by the road reference position conversion unit 15 into an estimated observed position when the observed position is acquired at a reference time serving as a reference. The detailed operation of the position estimation unit 16 will be described later.

The comparison unit 17 rearranges the observed positions after the position conversion in order of the traveling direction, and compares front and rear observed positions. Specifically, the comparison unit 17 creates pairs of front and rear observed positions in the traveling direction, calculates the difference in the vehicle traveling direction positions, the difference in the vehicle transverse direction positions, and the difference in the vehicle traveling direction speeds between each pair of observed positions, and determines whether the differences are within thresholds specified in the respective items. The comparison unit 17 determines that a pair of observed positions between which the differences are within the thresholds specified in the respective items are derived from the same object, and determines that a pair of observed positions between which at least one of the differences is greater than the threshold are derived from different objects. Note that the comparison unit 17 may calculate the difference in the vehicle traveling direction positions and the difference in the vehicle transverse direction positions between each pair of observed positions, and perform the determination based on whether the differences, here, the two differences are within the thresholds specified in the respective items.

For each pair of observed positions determined to be derived from the same object by the comparison unit 17, the identification processing unit 18 discards the observed position information on one observed position of the two observed positions, or generates observed position information into which the two observed positions are integrated. The identification processing unit 18 outputs an object identification result obtained by repeating the discarding of observed position information or generation of observed position information into which two observed positions are integrated.

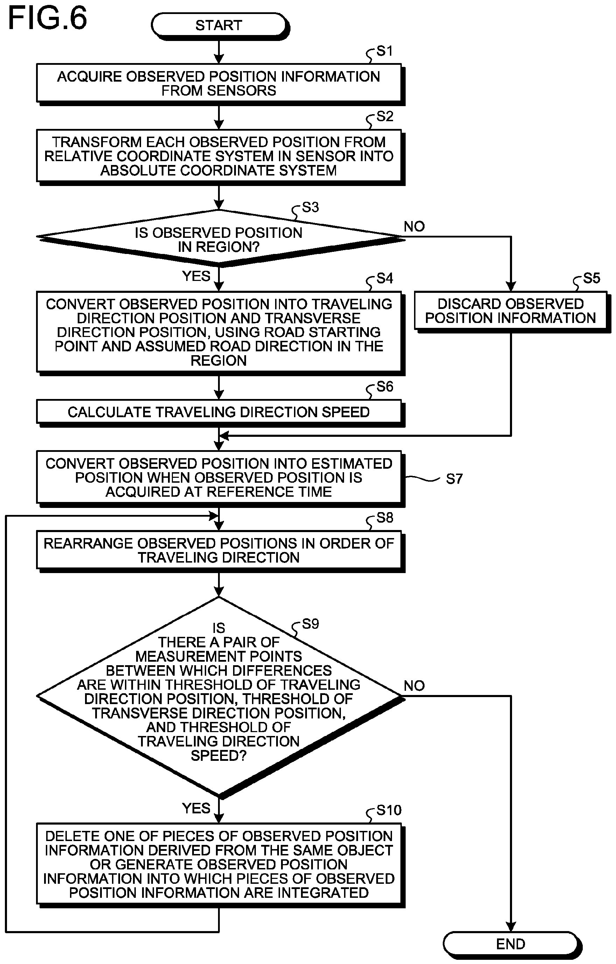

Next, the operation of the object identification device 10 to detect that observed positions indicated by acquired observed position information are derived from the same object, that is, to identify an object will be described. FIG. 6 is a flowchart illustrating the operation of the object identification device 10 according to the present embodiment. First, in the object identification device 10, the common coordinate transformation unit 13 acquires observed position information from the sensors (step S1).

The common coordinate transformation unit 13 transforms each acquired observed position from a relative coordinate system that is relative position information observed by the sensor into an absolute coordinate system common to the sensors such as latitude and longitude or coordinates obtained by transforming latitude and longitude into meters (step S2). When a laser is used as the sensor, for example, the relative position information measured by the sensor may be information such as the distance from the sensor to the observed position and the angle of the observed position as viewed from the sensor. As described above, when the observed positions are described in an absolute coordinate system common between the sensors, instead of relative position information to the sensors, the object identification device 10 can omit the operation in step S2.

The region determination unit 14 acquires the map information from the map information storage unit 12, and determines whether the observed position is in the regions on the map indicated by the map information (step S3). Specifically, the region determination unit 14 determines whether the observed position is included in any one of the regions of the map information illustrated in FIG. 5. When the observed position is in the region indicated by the map information (step S3: Yes), the region determination unit 14 notifies the road reference position conversion unit 15 that the observed position is in the region of the map information. The region determination unit 14 outputs the observed position information to the road reference position conversion unit 15.

The road reference position conversion unit 15 refers to the map information, and converts the observed position into a traveling direction position X and a transverse direction position Y of the vehicle with respect to the road in the map information, using the road starting point and the assumed road direction of the vehicle in the region in which the observed position is included (step S4). The road reference position conversion unit 15 can calculate the traveling direction position X of the vehicle and the transverse direction position Y of the vehicle using the following method, for example. The road reference position conversion unit 15, however, may use any calculation method by which the traveling direction position X of the vehicle and the transverse direction position Y of the vehicle can be calculated.

It is considered that the assumed road direction of the vehicle is parallel to the traveling direction of the vehicle, and the assumed road direction of the vehicle is perpendicular to the transverse direction of the vehicle. Thus, letting $\beta$ be the angle of the assumed road direction relative to a specified direction on the map, a traveling direction road vector $D(bold)_{hor}$ is defined as in formula (1), and a transverse direction road vector $D(bold)_{ver}$ is defined as in formula (2).

$$D(bold)_{hor} = (\cos\beta, \sin\beta) \ \ldots \ (1)$$

$$D(bold)_{ver} = (\cos(\beta - \pi/2), \sin(\beta - \pi/2)) \ \ldots \ (2)$$

Let a certain point in the map be origin point (0, 0) of the map, and observed coordinates of the vehicle, that is, the observed position be $S(bold) = (a, b)$. Letting the coordinates of the road starting point in the region be $P(bold)_{road} = (X_{road}, Y_{road})$, the road reference position conversion unit 15 can calculate a traveling direction position $X_{area}$ in the region by formula (3), and calculate a transverse direction position $Y_{area}$ in the region by formula (4).

$$X_{area} = D(bold)_{hor} \cdot (S(bold) - P(bold)_{road}) \ \ldots \ (3)$$

$$Y_{area} = D(bold)_{ver} \cdot (S(bold) - P(bold)_{road}) \ \ldots \ (4)$$

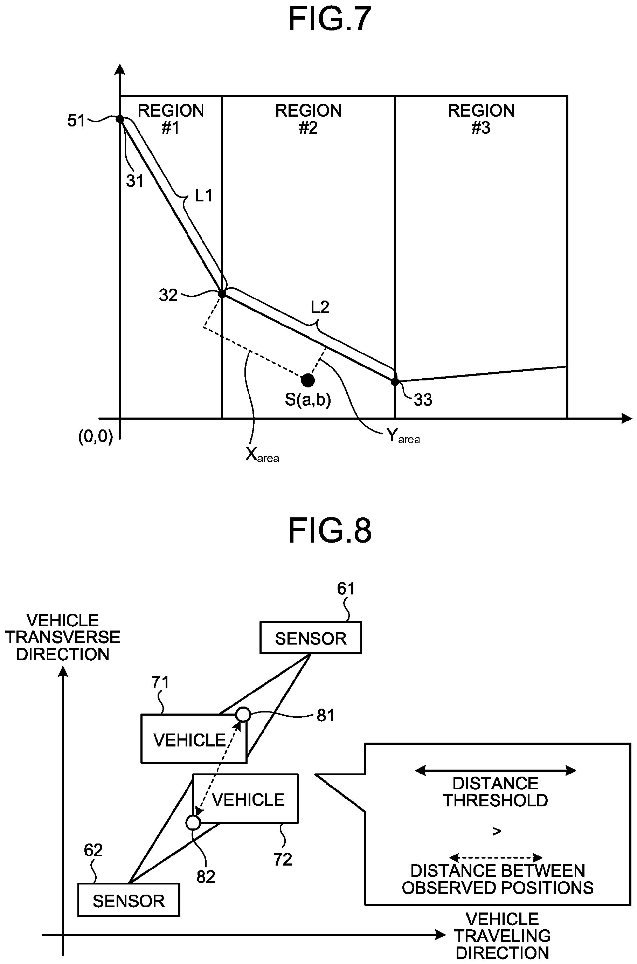

Of them, the traveling direction position $X_{area}$ in the region represents the distance from the road starting point coordinates in the region. However, in practice, it is necessary to calculate the traveling direction distance from the starting point 51 shared by the entire map. Thus, the distance from the starting point 51 shared by the entire map to the starting point in the region including the observed position is added. FIG. 7 is a diagram illustrating an example of processing in the object identification device 10 according to the present embodiment to convert the observed position information into the traveling direction position in the region and the transverse direction position in the region. For example, in FIG. 7, when an observed position S is in the region #2, a value obtained by adding the distance from the starting point 51 shared by the entire map to the road starting point 32 in the region #2, that is, the road starting point distance L1 in the region #2 to the traveling direction position $X_{area}$ in the region is the traveling direction position X of the vehicle. When the observed position S is in the region #1, the starting point 51 shared by the entire map coincides with the road starting point 31 in the region #1, and thus the traveling direction position $X_{area}$ in the region is the traveling direction position X of the vehicle. When the observed position S is in the region #3, a value obtained by adding the distance from the starting point 51 shared by the entire map to the road starting point 33 in the region #3, that is, the road starting point distance (L1+L2) in the region #3 to the traveling direction position $X_{area}$ in the region is the traveling direction position X of the vehicle. On the other hand, the transverse direction position $Y_{area}$ in the region coincides with a desired transverse direction position Y of the vehicle.

Thus, the road reference position conversion unit 15 can calculate the traveling direction position X of the vehicle and the transverse direction position Y of the vehicle, using the map information. The road reference position conversion unit 15 calculates a traveling direction speed indicating the speed of the vehicle in the traveling direction (step S6). Specifically, when the sensor is a radar, for example, the road reference position conversion unit 15 can calculate a traveling direction speed $V_X$ from a Doppler velocity $V_{get}$ projected in an observed direction, using the angle $\gamma$ between the assumed road direction of the vehicle and the measurement direction of the sensor, as in formula (5).

$$V_X = V_{get} / \cos\gamma \quad \cdots \quad (5)$$

When the observed position is not in any region indicated by the map information (step S3: No), the region determination unit 14 discards the observed position information (step S5).

Here, it is expected that the sensors connected to the object identification device 10 have different measurement cycles. In this case, in the object identification device 10, pieces of observed position information observed by the sensors are collected at different times. In the object identification device 10, it is important to compare past data and current data even if they are pieces of observed position information from the same sensor, to determine how the same vehicle has traveled. However, the pieces of observed position information acquired at different times cannot be simply compared because the vehicle has traveled. The position estimation unit 16 converts the observed positions acquired at different times into estimated observed positions when the observed positions are acquired at a reference time serving as a base time (step S7).

Here, let the reference time be $T_{ref}$, and the acquisition time of observed position information be $T_{get}$. The traveling direction of the vehicle can be regarded as a straight line relative to the assumed road direction in the region included in the map information stored in the map information storage unit 12 of the object identification device 10. When a dynamic map with a fast update cycle, for example, an update cycle of 100 ms or less is utilized, the time difference between the reference time $T_{ref}$ and the observed position acquisition time $T_{get}$ is short, and the vehicle can be considered to be moving at a constant speed. That is, the position estimation unit 16 can calculate an estimated traveling direction position $X_{est}$ of the vehicle, an estimated transverse direction position $Y_{est}$ of the vehicle, and an estimated traveling direction speed $V_{est}$ of the vehicle at the reference time $T_{ref}$, using the traveling direction position X, the transverse direction position Y of the vehicle, and the traveling direction speed $V_X$ of the vehicle at the acquisition time $T_{get}$, assuming that the vehicle observed at the acquisition time $T_{get}$ of the observed position information has made a uniform linear motion. Specifically, the position estimation unit 16 can easily calculate the estimated traveling direction position $X_{est}$, the estimated transverse direction position $Y_{est}$, and the estimated traveling direction speed $V_{est}$ at the reference time $T_{ref}$ by the following formulas (6) to (8).

$$X_{est} = X + V_X \times (T_{ref} - T_{get}) \quad \cdots \quad (6)$$

$$Y_{est} = X \quad \cdots \quad (7)$$

$$V_{est} = V \quad \cdots \quad (8)$$

Thus, the position estimation unit 16 can treat the pieces of data of observed position information at the different acquisition times $T_{get}$ as those acquired at the same reference time $T_{ref}$. By representing the vehicle in the traveling direction and the transverse direction, using the map information, the position estimation unit 16 can perform estimation processing, assuming that the vehicle has made a uniform linear motion regardless of whether the road is a straight line or a curve. The reference time $T_{ref}$ may be the next transmission time of the dynamic map, or the previous transmission time of the dynamic map or the like may be used. When the measurement cycles of the sensors are the same and synchronized, the object identification device 10 can omit the operation in step S6. Even if acquisition times are strictly different, the position estimation unit 16 may regard acquisition times in a specified period as the same. The specified period is, for example, the time required to travel a distance less than the length of one vehicle, in consideration of the speed of the vehicle.

Next, the comparison unit 17 rearranges the observed positions that can be considered to be simultaneously acquired by the processing of the position estimation unit 16, in order of the vehicle traveling direction (step S8). On the observed positions rearranged in order of the vehicle traveling direction, the comparison unit 17 creates pairs of front and rear observed positions in the order, and calculates the difference in the vehicle traveling direction positions, the difference in the vehicle transverse direction positions, and the difference in the vehicle traveling direction speeds, between each pair of observed positions. The comparison unit 17 determines whether there is a pair of observed positions between which the differences are within the thresholds specified in the respective items, specifically, the threshold of the vehicle traveling direction position, the threshold of the vehicle transverse direction position, and the threshold of the vehicle traveling direction speed (step S9). The threshold of the vehicle traveling direction position is set, for example, within 18 m based on the vehicle length. The threshold of the vehicle transverse direction position is set, for example, to the vehicle width or the road width, specifically, to 3.5 m or so for an expressway. The threshold of the vehicle traveling direction speed is set, for example, within $\pm\alpha$ km/h.

When the differences are within the threshold of the vehicle traveling direction position, the threshold of the vehicle transverse direction position, and the threshold of the vehicle traveling direction speed (step S9: Yes), the comparison unit 17 determines that the pair of observed positions between which the differences are within the thresholds specified in the respective items are derived from the same object. The comparison unit 17 notifies the identification processing unit 18 of the determination result. For the pair of observed positions determined to be derived from the same object, the identification processing unit 18 deletes the observed position information on one observed position of the two observed positions, or generates observed position information into which the two observed positions are integrated (step S10). The object identification device 10 repeatedly executes the processing until there is no pair of observed positions between which the differences are within the thresholds in step S9. When there is no pair of observed positions between which the differences are within the thresholds, that is, No in step S9, the processing is ended.

The effects obtained by the object identification device 10 performing the above processing will be specifically described.

(1) Comparison with a case where no map information is stored

Compared with the case where no map information is stored, the object identification device 10 can determine whether observed positions are derived from the same object by providing different thresholds for the vehicle traveling direction position and the vehicle transverse direction position. Specifically, the object identification device 10 can compare vehicle positions using two types of thresholds, the threshold of the vehicle traveling direction position and the threshold of the vehicle transverse direction position. On the other hand, a device not storing map information performs determination of whether observed positions are derived from the same object by comparing vehicle positions based on a relative distance between two points of the observed positions, that is, using only one type of distance threshold. Thus, there is a possibility that a vehicle in the next lane may be regarded as the same object. This is because the distance between vehicles in the transverse direction is short while the vehicle body is long in the traveling direction. For example, the road width may be 3.5 m or less while a large car is 10 m long. FIG. 8 is a diagram illustrating an example in which the device not storing map information erroneously determines that two observed positions are derived from the same object. FIG. 8 illustrates the positional relationship between an observed position 81 when a sensor 61 observes a vehicle 71 and an observed position 82 when a sensor 62 observes a vehicle 72. Thus, when the distance between the observed positions 81 and 82 is equal to or less than one type of distance threshold, the device not storing map information erroneously determines that the observed positions 81 and 82 are observed positions derived from the same object. By contrast, the object identification device 10 can avoid such erroneous determination by reducing the threshold of the vehicle transverse direction position compared to the threshold of the vehicle traveling direction position. Further, by storing the map information, the object identification device 10 can perform processing on the assumption that a vehicle is in uniform linear motion in each region.

(2) Comparison with a case where the map information is stored as a function of the road

The object identification device 10 may store the map information in the form of expressing the shape of the road by a function. However, it is difficult to express the shape of the road in the form of a general function because the shape of the road is generated from a complex combination of a straight line, an arc, a clothoid curve, a parabola, etc., and the actual road includes production errors. When an arbitrary nth-order polynomial is modeled from actual measured values of the map, overfitting may occur depending on a polynomial interpolation method, and a road with a shape completely different from the original shape of the road may be modeled. For a road expressed in the form of a function, it is necessary to perform calculation for determining a perpendicular between the observed position and the function to determine the transverse direction position, integration of the function for determining the traveling direction position, calculation of a tangential direction for calculating the traveling direction of the observed position, etc. Depending on the form of the function of the road, the calculation may become complicated, that is, processing load may be increased. By contrast, as described above, the object identification device 10 can reduce processing load by using the map information in which the road is divided into the regions that allow linear approximation.

(3) Comparison with a case where the map information is stored as a function of the road, and only an assumed road direction is acquired

After road information is stored in the form of a function, it is possible, from the function, to acquire only information on an assumed road direction based on a derivative value of the function, and calculate the difference in traveling direction positions and the difference in transverse direction positions between observed positions, individually, using the assumed road direction as the traveling direction. However, the difference in the traveling direction positions and the difference in the transverse direction positions must be determined based on position information on objects from a unified standard of the map. In this case, calculation using all combinations of observed positions is required. Thus, for m observed positions, calculation of the differences between the observed positions requires $_mC_2$ operations. By contrast, the object identification device 10 storing the map information calculates the difference in the traveling direction positions between front and rear observed positions, and thus for m observed positions, performs m-1 operations to calculate the differences between the positions necessary for the identification of an object, and can reduce processing load.

Next, the hardware configuration of the object identification device 10 will be described. In the object identification device 10, the sensor installation information storage unit 11 and the map information storage unit 12 are memory. The common coordinate transformation unit 13, the region determination unit 14, the road reference position conversion unit 15, the position estimation unit 16, the comparison unit 17, and the identification processing unit 18 are implemented by a processing circuit. That is, the object identification device 10 includes a processing circuit for determining whether observed positions are derived from the same object. The processing circuit may be a processor for executing programs stored in memory and the memory, or may be dedicated hardware.

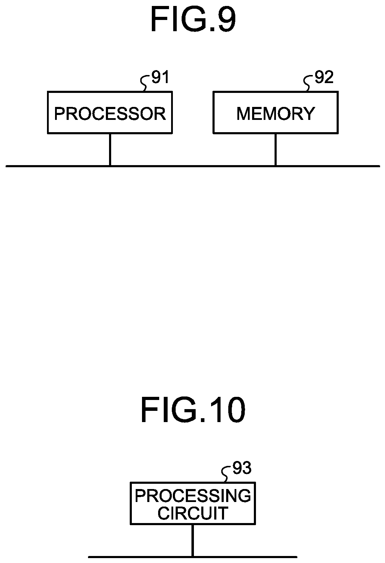

FIG. 9 is a diagram illustrating an example of a case where the processing circuit of the object identification device 10 according to the present embodiment is formed of a processor and memory. When the processing circuit is formed of a processor 91 and memory 92, the functions of the processing circuit of the object identification device 10 are implemented by software, firmware, or a combination of software and firmware. Software or firmware is described as programs and stored in the memory 92. In the processing circuit, the processor 91 reads and executes the programs stored in the memory 92, thereby implementing the functions. That is, in the object identification device 10, the processing circuit includes the memory 92 for storing programs that result in the execution of the determination of whether observed positions are derived from the same object. These programs can be said to cause a computer to perform the procedure and method in the object identification device 10. The memory of the sensor installation information storage unit 11 and the map information storage unit 12 may be the same as the memory 92.

Here, the processor 91 may be a Central Processing Unit (CPU), a processing unit, an arithmetic unit, a microprocessor, a microcomputer, a Digital Signal Processor (DSP), or the like. The memory 92 corresponds, for example, to nonvolatile or volatile semiconductor memory such as Random Access Memory (RAM), Read Only Memory (ROM), a flash memory, an Erasable Programmable ROM (EPROM), or an Electrically EPROM (EEPROM) (registered trademark), or a magnetic disk, a flexible disk, an optical disk, a compact disk, a mini disk, a Digital Versatile Disc (DVD), or the like.

FIG. 10 is a diagram illustrating an example of a case where the processing circuit of the object identification device 10 according to the present embodiment is formed of dedicated hardware. When the processing circuit is formed of dedicated hardware, a processing circuit 93 illustrated in FIG. 10 corresponds, for example, to a single circuit, a combined circuit, a programmed processor, a parallel-programmed processor, an Application Specific Integrated Circuit (ASIC), a Field Programmable Gate Array (FPGA), or a combination of them. The functions of the object identification device 10 may be implemented by the processing circuit 93 on an individual function basis, or the functions may be collectively implemented by the processing circuit 93.

Note that the functions of the object identification device 10 may be implemented partly by dedicated hardware and partly by software or firmware. Thus, the processing circuit can implement the above-described functions by dedicated hardware, software, firmware, or a combination of them.

As described above, according to the present embodiment, the object identification device 10 stores map information, and an area indicated by the map information is subdivided into a plurality of regions, whereby a motion model of a vehicle traveling on a curve is substituted by a model in which the vehicle moves on a straight line all the way in each region. Consequently, the object identification device 10 can reduce processing load when identifying an object, that is, a vehicle.

Reference Signs List

10 object identification device; 11 sensor installation information storage unit; 12 map information storage unit; 13 common coordinate transformation unit; 14 region determination unit; 15 road reference position conversion unit; 16 position estimation unit; 17 comparison unit; 18 identification processing unit; 20 roadside apparatus.

**Claims**

1. An object identification device (10) comprising:

   a map information storage unit (12) to store map information indicating information on a road;
   a region determination unit (14) to acquire observed position information indicating observed positions at which an object is observed from a plurality of sensors, and determine whether each observed position is in any one of regions into which an area indicated by the map information is divided;
   a road reference position conversion unit (15) to convert each observed position determined to be in the region of the map information, into a traveling direction position indicating a position in a direction parallel to an assumed road direction in the region indicated by the map information, and a transverse direction position indicating a position in a direction perpendicular to the assumed road direction in the region, using the map information; and
   a comparison unit (17) to rearrange the observed positions in order of the traveling direction, create pairs of front and rear observed positions in the traveling direction, calculate a difference in the traveling direction positions and a difference in the transverse direction positions between each pair of observed positions, and determine that a pair of observed positions between which the differences are within thresholds specified in respective items are derived from the same object, and determine that a pair of observed positions between which at least one of the differences is greater than the threshold are derived from different objects.

2. The object identification device (10) according to claim 1, wherein
   the road reference position conversion unit (15) further calculates a traveling direction speed indicating a speed of the object in the traveling direction at each observed position determined to be in the region of the map information, and the comparison unit (17) further calculates a difference in the traveling direction speeds between each pair of observed positions, and determines that a pair of observed positions between which the differences are within thresholds specified in respective items are derived from the same object, and determines that a pair of observed positions between which at least one of the differences is greater than the threshold are derived from different objects.

3. The object identification device (10) according to claim 1 or 2, wherein
   in the map information, the area indicated by the map information is divided into a plurality of regions, and each divided region is of a size that allows the road to be linearly approximated in the region.

4. The object identification device (10) according to claim 3, wherein
   the map information includes a starting point shared by an entire map that is a reference point of the road indicated by the map information, a road starting point in each region that is a reference point of the road in the region, division information on the regions indicating a divided state of the area on the map indicated by the map information, an assumed road direction in each region defining a direction of the road in the region, a passing order of the regions indicating an order of the regions through which the object passes when traveling in the assumed road directions in the regions, and information on a road starting point distance in each region indicating a distance from the starting point shared by the entire map to the road starting point in the region.

5. The object identification device (10) according to any one of claims 1 to 4, further comprising:
   an identification processing unit (18) to delete, on the pair of observed positions determined to be derived from the same object by the comparison unit (17), the observed position information on one observed position of the two observed positions, or generate observed position information into which the two observed positions are integrated.

6. The object identification device (10) according to any one of claims 1 to 5, further comprising:

   a sensor installation information storage unit (11) to store sensor installation information that is information on installation positions of the plurality of sensors; and

a common coordinate transformation unit (13) to transform the observed positions indicated by the observed position information acquired from the plurality of sensors into positions of absolute coordinates common to the sensors, using the sensor installation information, when the observed positions are indicated by relative positions in the sensors.

**7.** The object identification device (10) according to any one of claims 1 to 6, further comprising:
a position estimation unit (16) to convert each observed position converted by the road reference position conversion unit into an estimated observed position when the observed position is acquired at a reference time serving as a reference, when acquisition times of the observed position information acquired from the plurality of sensors vary from observed position information to observed position information.

**8.** A roadside apparatus (20) comprising the object identification device (10) according to any one of claims 1 to 7.

**9.** An object identification method comprising:

a determination step performed by a region determination unit (14) of acquiring observed position information indicating observed positions at which an object is observed from a plurality of sensors, and determining whether each observed position is in any one of regions into which an area indicated by map information that is information on a road is divided;

a conversion step performed by a road reference position conversion unit (15) of converting each observed position determined to be in the region of the map information, into a traveling direction position indicating a position in a direction parallel to an assumed road direction in the region indicated by the map information, and a transverse direction position indicating a position in a direction perpendicular to the assumed road direction in the region, using the map information; and

a comparison step performed by a comparison unit (17) of rearranging the observed positions after the position conversion in order of the traveling direction, creating pairs of front and rear observed positions in the traveling direction, calculating a difference in the traveling direction positions and a difference in the transverse direction positions between each pair of observed positions, and determining that a pair of observed positions between which the differences are within thresholds specified in respective items are derived from the same object, and determining that a pair of observed positions between which at least one of the differences is greater than the threshold are derived from different objects.

**Patentansprüche**

**1.** Objektidentifikationseinrichtung (10), umfassend:

eine Karteninformationen-Speichereinheit (12) zum Speichern von Karteninformationen, die Informationen über eine Straße anzeigen;

eine Region-Bestimmungseinheit (14) zum Beschaffen von beobachteten Positionsinformationen, die beobachtete Positionen anzeigen, an denen ein Objekt von einer Vielzahl von Sensoren beobachtet wird, und zum Bestimmen, ob jede beobachtete Position in einer von Regionen liegt, in die ein durch die Karteninformationen angezeigter Bereich unterteilt ist;

eine Straßenreferenzposition-Umwandlungseinheit (15) zum Umwandeln jeder beobachteten Position, die bestimmt wurde, in der Region der Karteninformationen zu sein, in eine Fahrtrichtungsposition, die eine Position in einer Richtung parallel zu einer angenommenen Straßenrichtung in der durch die Karteninformationen angezeigten Region anzeigt, und eine Querrichtungsposition, die eine Position in einer Richtung senkrecht zu der angenommenen Straßenrichtung in der Region anzeigt, unter Verwendung der Karteninformationen; und

eine Vergleichseinheit (17) zum Umordnen der beobachteten Positionen in einer Reihenfolge der Fahrtrichtung, zum Erzeugen von Paaren von vorderen und hinteren beobachteten Positionen in der Fahrtrichtung, zum Berechnen einer Differenz in den iFahrtrichtungspositionen und einer Differenz in den Querrichtungspositionen zwischen jedem Paar von beobachteten Positionen und zum Bestimmen, dass ein Paar von beobachteten Positionen, zwischen denen die Differenzen innerhalb von in entsprechenden Punkten spezifizierten Schwellenwerten liegen, von demselben Objekt abgeleitet sind, und zum Bestimmen, dass ein Paar von beobachteten Positionen, zwischen denen zumindest eine der Differenzen größer als der Schwellenwert ist, von verschiedenen Objekten abgeleitet sind.

**2.** Objektidentifikationseinrichtung (10) nach Anspruch 1, wobei

die Straßenreferenzposition-Umwandlungseinheit (15) ferner eine Fahrtrichtungsgeschwindigkeit berechnet, die eine Geschwindigkeit des Objekts in der Fahrtrichtung an jeder beobachteten Position, die bestimmt ist, in der Region der Karteninformationen zu liegen, anzeigt, und

die Vergleichseinheit (17) ferner eine Differenz in den Fahrtrichtungsgeschwindigkeiten zwischen jedem Paar von beobachteten Positionen berechnet und bestimmt, dass ein Paar von beobachteten Positionen, zwischen denen die Differenzen innerhalb von Schwellenwerten liegen, die in entsprechenden Punkten spezifiziert sind, von demselben Objekt abgeleitet sind, und bestimmt, dass ein Paar von beobachteten Positionen, zwischen denen zumindest eine der Differenzen größer als der Schwellenwert ist, von verschiedenen Objekten abgeleitet sind.

3. Objektidentifikationseinrichtung (10) nach Anspruch 1 oder 2, wobei
in den Karteninformationen der durch die Karteninformationen angezeigte Bereich in eine Vielzahl von Regionen unterteilt ist und jede unterteilte Region eine Größe aufweist, die eine lineare Annäherung der Straße in der Region ermöglicht.

4. Objektidentifikationseinrichtung (10) nach Anspruch 3, wobei
die Karteninformationen einen von einer gesamten Karte gemeinsam genutzten Startpunkt, der ein Referenzpunkt der durch die Karteninformationen angezeigten Straße ist, einen Straßenstartpunkt in jeder Region, der ein Referenzpunkt der Straße in der Region ist, Teilungsinformationen über die Regionen, die einen geteilten Zustand des Bereichs auf der durch die Karteninformationen angezeigten Karte anzeigen, eine angenommene Straßenrichtung in jeder Region, die eine Richtung der Straße in der Region definiert, eine Durchfahrtsreihenfolge der Regionen, die eine Reihenfolge der Regionen anzeigt, durch die das Objekt fährt, wenn es in den Regionen in den angenommenen Straßenrichtungen fährt, und Informationen über eine Straßenstartpunktentfernung in jeder Region, die eine Entfernung von dem durch die gesamte Karte geteilten Startpunkt zu dem Straßenstartpunkt in der Region anzeigt, umfasst.

5. Objektidentifikationseinrichtung (10) nach einem der Ansprüche 1 bis 4, ferner umfassend:
eine Identifikationsverarbeitungseinheit (18) zum Löschen, bei dem Paar von beobachteten Positionen, die von der Vergleichseinheit (17) als von demselben Objekt abgeleitet bestimmt wurden, der beobachteten Positionsinformationen über eine beobachtete Position der zwei beobachteten Positionen oder zum Erzeugen von beobachteten Positionsinformationen, in die die zwei beobachteten Positionen integriert werden.

6. Objektidentifikationseinrichtung (10) nach einem der Ansprüche 1 bis 5, ferner umfassend:

eine Sensorinstallationsinformationen-Speichereinheit (11) zum Speichern von Sensorinstallationsinformationen, die Informationen zu Installationspositionen der Vielzahl von Sensoren sind; und
eine gemeinsame Koordinatentransformationseinheit (13) zum Transformieren der beobachteten Positionen, die durch die beobachteten Positionsinformationen angezeigt werden, die von der Vielzahl von Sensoren erfasst werden, in Positionen von absoluten Koordinaten, die den Sensoren gemeinsam sind, unter Verwendung der Sensorinstallationsinformationen, wenn die beobachteten Positionen durch relative Positionen in den Sensoren angezeigt werden.

7. Objektidentifikationseinrichtung (10) nach einem der Ansprüche 1 bis 6, ferner umfassend:
eine Positionsschätzeinheit (16) zum Umwandeln jeder beobachteten Position, die durch die Straßenreferenzposition-Umwandlungseinheit umgewandelt wird, in eine geschätzte beobachtete Position, wenn die beobachtete Position zu einer Referenzzeit beschafft wird, die als Referenz dient, wenn Beschaffungszeiten der beobachteten Positionsinformationen, die von der Vielzahl von Sensoren beschafft werden, von beobachteten Positionsinformationen zu beobachteten Positionsinformationen variieren.

8. Straßenrandvorrichtung (20), umfassend die Objektidentifikationseinrichtung (10) nach einem der Ansprüche 1 bis 7.

9. Objektidentifikationsverfahren, umfassend:

einen Bestimmungsschritt, der durch eine Region-Bestimmungseinheit (14) durchgeführt wird, zum Beschaffen von beobachteten Positionsinformationen, die beobachtete Positionen anzeigen, an denen ein Objekt von einer Vielzahl von Sensoren beobachtet wird, und zum Bestimmen, ob jede beobachtete Position in einer von Regionen liegt, in die ein durch Karteninformationen, die Informationen über eine Straße sind, angezeigter Bereich unterteilt ist;

einen Umwandlungsschritt, der durch eine Straßenreferenzposition-Umwandlungseinheit (15) durchgeführt wird, zum Umwandeln jeder beobachteten Position, die bestimmt wird, in der Region der Karteninformationen zu sein, in eine Fahrtrichtungsposition, die eine Position in einer Richtung parallel zu einer angenommenen Straßenrichtung in der durch die Karteninformationen angezeigten Region anzeigt, und eine Querrichtungsposition, die eine Position in einer Richtung senkrecht zu der angenommenen Straßenrichtung in der Region anzeigt, unter Verwendung der Karteninformationen; und

einen Vergleichsschritt, der durch eine Vergleichseinheit (17) durchgeführt wird, zum Umordnen der beobachteten Positionen nach der Positionsumwandlung in der Reihenfolge der Fahrtrichtung, zum Erstellen von Paaren von vorderen und hinteren beobachteten Positionen in der Fahrtrichtung, zum Berechnen einer Differenz in den Fahrtrichtungspositionen und einer Differenz in den Querrichtungspositionen zwischen jedem Paar von beobachteten Positionen, und zum Bestimmen, dass ein Paar von beobachteten Positionen, zwischen denen die Differenzen innerhalb von in entsprechenden Punkten spezifizierten Schwellenwerten liegen, von demselben Objekt abgeleitet werden, und zum Bestimmen, dass ein Paar von beobachteten Positionen, zwischen denen zumindest eine der Differenzen größer als der Schwellenwert ist, von verschiedenen Objekten abgeleitet werden.

## Revendications

1. Dispositif d'identification d'objet (10) comprenant :

   une unité de stockage d'informations de carte (12) pour stocker des informations de carte indiquant des informations sur une route ;
   une unité de détermination de région (14) pour acquérir des informations de position observée indiquant des positions observées auxquelles un objet est observé à partir d'une pluralité de capteurs, et déterminer si chaque position observée se trouve dans l'une quelconque de régions dans lesquelles une zone indiquée par les informations de carte est divisée ;
   une unité de conversion de position de référence de route (15) pour convertir chaque position observée déterminée comme se trouvant dans la région des informations de carte, en une position de direction de déplacement indiquant une position dans une direction parallèle à une direction de route présumée dans la région indiquée par les informations de carte, et une position en direction transversale indiquant une position dans une direction perpendiculaire à la direction de route présumée dans la région, à l'aide des informations de carte ; et
   une unité de comparaison (17) pour réorganiser les positions observées dans l'ordre de la direction de déplacement, créer des paires de positions observées avant et arrière dans la direction de déplacement, calculer une différence dans les positions en direction de déplacement et une différence dans les positions en direction transversale entre chaque paire de positions observées, et déterminer qu'une paire de positions observées entre lesquelles les différences se trouvent dans des seuils spécifiés dans des items respectifs sont dérivées du même objet, et déterminer qu'une paire de positions observées entre lesquelles au moins l'une des différences est plus grande que le seuil sont dérivées d'objets différents.

2. Dispositif d'identification d'objet (10) selon la revendication 1, dans lequel

   l'unité de conversion de position de référence de route (15) calcule en outre une vitesse en direction de déplacement indiquant une vitesse de l'objet dans la direction de déplacement à chaque position observée déterminée comme se trouvant dans la région des informations de carte, et
   l'unité de comparaison (17) calcule en outre une différence dans les vitesses en direction de déplacement entre chaque paire de positions observées, et détermine qu'une paire de positions observées entre lesquelles les différences se trouvent dans des seuils spécifiés dans des items respectifs sont dérivées du même objet, et détermine qu'une paire de positions observées entre lesquelles au moins l'une des différences est plus grande que le seuil sont dérivées d'objets différents.

3. Dispositif d'identification d'objet (10) selon la revendication 1 ou 2, dans lequel
   dans les informations de carte, la zone indiquée par les informations de carte est divisée en une pluralité de régions, et chaque région divisée est d'une taille qui permet une approximation linéaire de la route dans la région.

4. Dispositif d'identification d'objet (10) selon la revendication 3, dans lequel
   les informations de carte incluent un point de départ partagé par une carte entière qui est un point de référence de la route indiquée par les informations de carte, un point de départ de route dans chaque région qui est un point de référence de la route dans la région, des informations de division sur les régions indiquant un état divisé de la zone

13

sur la carte indiquée par les informations de carte, une direction de route présumée dans chaque région définissant une direction de la route dans la région, un ordre de passage des régions indiquant un ordre des régions par lesquelles passe l'objet lors d'un déplacement dans les directions de route présumées dans les régions, et des informations sur une distance de point de départ de route dans chaque région indiquant une distance entre le point de départ partagé par la carte entière et le point de départ de route dans la région.

5. Dispositif d'identification d'objet (10) selon l'une quelconque des revendications 1 à 4, comprenant en outre :
une unité de traitement d'identification (18) pour supprimer, sur la paire des positions observées déterminées comme étant dérivées du même objet par l'unité de comparaison (17), les informations de position observée sur une position observée des deux positions observées, ou générer des informations de position observée dans lesquelles les deux positions observées sont intégrées.

6. Dispositif d'identification d'objet (10) selon l'une quelconque des revendications 1 à 5, comprenant en outre :

une unité de stockage d'informations d'installation de capteur (11) pour stocker des informations d'installation de capteur qui sont des informations sur des positions d'installation de la pluralité de capteurs ; et
une unité de transformation de coordonnées communes (13) pour transformer les positions observées indiquées par les informations de position observée provenant de la pluralité de capteurs en positions de coordonnées absolues communes aux capteurs, à l'aide des informations d'installation de capteur, lorsque les positions observées sont indiquées par des positions relatives dans les capteurs.

7. Dispositif d'identification d'objet (10) selon l'une quelconque des revendications 1 à 6, comprenant en outre :
une unité d'estimation de position (16) pour convertir chaque position observée convertie par l'unité de conversion de position de référence de route en une position observée estimée lorsque la position observée est acquise à un temps de référence servant de référence, lorsque des temps d'acquisitions des informations de position observée acquises à partir de la pluralité de capteurs varient entre des informations de position observée.

8. Appareil de bord de route (20) comprenant le dispositif d'identification d'objet (10) selon l'une quelconque des revendications 1 à 7.

9. Procédé d'identification d'objet comprenant :

une étape de détermination réalisée par une unité de détermination de région (14) consistant à acquérir des informations de position observée indiquant des positions observées auxquelles un objet est observé à partir d'une pluralité de capteurs, et déterminer si chaque position observée se trouve dans l'une quelconque de régions dans lesquelles une zone indiquée par des informations de carte qui sont des informations sur une route est divisée ;
une étape de conversion réalisée par une unité de conversion de position de référence de route (15) consistant à convertir chaque position observée déterminée comme se trouvant dans la région des informations de carte, en une position de direction de déplacement indiquant une position dans une direction parallèle à une direction de route présumée dans la région indiquée par les informations de carte, et une position en direction transversale indiquant une position dans une direction perpendiculaire à la direction de route présumée dans la région, à l'aide des informations de carte ; et
une étape de comparaison réalisée par une unité de comparaison (17) consistant à réorganiser les positions observées après la conversion de position dans l'ordre de la direction de déplacement, créer des paires de positions observées avant et arrière dans la direction de déplacement, calculer une différence dans les positions en direction de déplacement et une différence dans les positions en direction transversale entre chaque paire de positions observées, et déterminer qu'une paire de positions observées entre lesquelles les différences se trouvent dans des seuils spécifiés dans des items respectifs sont dérivées du même objet, et déterminer qu'une paire de positions observées entre lesquelles au moins l'une des différences est plus grande que le seuil sont dérivées d'objets différents.

# FIG.1

ROADSIDE APPARATUS — 20

OBJECT IDENTIFICATION DEVICE — 10

MAP INFORMATION → MAP INFORMATION STORAGE UNIT (12)

SENSOR INSTALLATION INFORMATION → SENSOR INSTALLATION INFORMATION STORAGE UNIT (11)

OBSERVED POSITION INFORMATION → COMMON COORDINATE TRANSFORMATION UNIT (13) → REGION DETERMINATION UNIT (14) → ROAD REFERENCE POSITION CONVERSION UNIT (15)

OBJECT IDENTIFICATION RESULT ← IDENTIFICATION PROCESSING UNIT (18) ← COMPARISON UNIT (17) ← POSITION ESTIMATION UNIT (16)

EP 3 618 027 B1

# FIG.2

# FIG.3

# FIG.4

TRANSVERSE DIRECTION
POSITION ON MAP

OBSERVED
POSITION

ROAD STARTING
POINT ON MAP

TRAVELING
DIRECTION POSITION
ON MAP

DERIVED FROM
OBJECT 1

DERIVED FROM
OBJECT 2

EP 3 618 027 B1

# FIG.5

# FIG.6

START

**S1**
ACQUIRE OBSERVED POSITION INFORMATION FROM SENSORS

**S2**
TRANSFORM EACH OBSERVED POSITION FROM RELATIVE COORDINATE SYSTEM IN SENSOR INTO ABSOLUTE COORDINATE SYSTEM

**S3**
IS OBSERVED POSITION IN REGION? — NO

YES

**S4**
CONVERT OBSERVED POSITION INTO TRAVELING DIRECTION POSITION AND TRANSVERSE DIRECTION POSITION, USING ROAD STARTING POINT AND ASSUMED ROAD DIRECTION IN THE REGION

**S5**
DISCARD OBSERVED POSITION INFORMATION

**S6**
CALCULATE TRAVELING DIRECTION SPEED

**S7**
CONVERT OBSERVED POSITION INTO ESTIMATED POSITION WHEN OBSERVED POSITION IS ACQUIRED AT REFERENCE TIME

**S8**
REARRANGE OBSERVED POSITIONS IN ORDER OF TRAVELING DIRECTION

**S9**
IS THERE A PAIR OF MEASUREMENT POINTS BETWEEN WHICH DIFFERENCES ARE WITHIN THRESHOLD OF TRAVELING DIRECTION POSITION, THRESHOLD OF TRANSVERSE DIRECTION POSITION, AND THRESHOLD OF TRAVELING DIRECTION SPEED? — NO

YES

**S10**
DELETE ONE OF PIECES OF OBSERVED POSITION INFORMATION DERIVED FROM THE SAME OBJECT OR GENERATE OBSERVED POSITION INFORMATION INTO WHICH PIECES OF OBSERVED POSITION INFORMATION ARE INTEGRATED

END

# FIG.7

# FIG.8

# FIG.9

# FIG.10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006153736 A

**Non-patent literature cited in the description**

- **MICHAEL DIXON et al.** An efficient system for vehicle tracking in multi-camera networks. *DISTRIBUTED SMART CAMERAS, 2009. ICDSC 2009. THIRD ACM/IEEE INTERNATIONAL CONFERENCE ON, IEEE, PISCATAWAY, NJ, USA,* 30 August 2009, IS-BN 978-1-4244-4620-9, 1-8